# EUROPEAN PATENT APPLICATION

(11) **EP 3 550 488 A1**
(43) Date of publication of application: **09.10.2019**
(21) Application number: 19166887.0
(22) Date of filing: 02.04.2019
(51) Int. Cl.: G06Q 10/10

(54) **SYSTEM AND METHOD FOR CREDENTIALING ACCESS TO RESTRICTED ROOMS**

(30) Priority: 05.04.2018 IN 201811013101
(71) Applicant: Carrier Corporation, Palm Beach Gardens, FL 33418 (US)
(72) Inventor: KANTETI, Neeraja, Palm Beach Gardens, FL 33418 (US); KUENZI, Adam, Palm Beach Gardens, FL 33418 (US); BETHALAM, Suresh Raju, Palm Beach Gardens, FL 33418 (US)
(74) Representative: Dehns

(57) **Abstract**

A method for credentialing access to a restricted area includes receiving a reservation request at a reservation server (30) and extracting reservation information from the reservation request using the reservation server (30). The reservation information includes at least a set of authorized visitors from the reservation request, a timestamp of the reservation request, and a room identifier of the reservation request. The method passes the reservation information to a credentialing server (40), authenticates the reservation request by at least verifying a payment, and provides an access credential to each visitor in the set of authorized visitors.

## Description

### TECHNICAL FIELD

The present disclosure relates generally to credentialing systems for allowing access to restricted areas, and more specifically to a system and method for managing mobile credentials to a restricted access room or set of rooms.

### BACKGROUND

Building systems such as hotels, universities, and the like, typically include multiple rooms or areas that have restricted access. By way of example, conference rooms in a hotel may be limited to authorized conference attendees, laboratories in universities may be limited to authorized employees and students, classrooms in a school building may be limited to students registered for a given class, etc.

One system that is utilized to ensure that only authorized attendees are permitted to enter a room with the utilization of digital credentials on a mobile device to unlock the entrance to the room. Under such systems, each attendee has a mobile device that includes credentials allowing the attendee to enter the room. Systems for interfacing mobile devices, such as mobile phones, with smart locks to enable access to the room are generally known and can come in various forms.

### SUMMARY OF THE INVENTION

An exemplary method for credentialing access to a restricted area includes receiving a reservation request at a reservation server, extracting reservation information from the reservation request using the reservation server, where the reservation information includes at least a set of authorized visitors from the reservation request, a timestamp of the reservation request, and a room identifier of the reservation request, passing the reservation information to a credentialing server, authenticating the reservation request by at least verifying a payment, and providing an access credential to each visitor in the set of authorized visitors.

In another example of the above described method for credentialing access to a restricted area authenticating the reservation request by at least verifying payment includes processing a payment using a payment processing module in an authentication sub module of the reservation server.

In another example of any of the above described methods for credentialing access to a restricted area authenticating the reservation request by at least verifying payment includes comparing a payment indicator to a received payments database, and authenticating the reservation request in response to the payment indicator matching an entry in the received payments database.

In another example of any of the above described methods for credentialing access to a restricted area the reservation request is an email, and wherein the email identifies each authorized user via the authorized user's email address.

Another example of any of the above described methods for credentialing access to a restricted area further includes modifying at least one reservation detail in response to an update reservation request from a leader.

Another example of any of the above described methods for credentialing access to a restricted area further includes updating a set of access credentials based on the at least one reservation detail and providing an updated access credential to each visitor in the set of authorized visitors.

In another example of any of the above described methods for credentialing access to a restricted area the access credential includes at least one of an access code, a pin, and a credentials package for a smart lock application.

Another example of any of the above described methods for credentialing access to a restricted area further includes transmitting a notification to the credentialing server in response to the access credential of at least one authorized visitor being utilized, and compiling a list of each authorized user whose access credentials were utilized.

Another example of any of the above described methods for credentialing access to a restricted area further includes transmitting at least one notification to a reservation manager, the at least one notification including a list of each visitor in the set of authorized visitors whose access credential was utilized.

In another example of any of the above described methods for credentialing access to a restricted area the list includes a user name and a timestamp corresponding to each utilized access credential.

In another example of any of the above described methods for credentialing access to a restricted area the timestamp is a listing of each time the corresponding access credential was utilized.

In another example of any of the above described methods for credentialing access to a restricted area the reservation request is a communication from an email client plugin.

An exemplary method for credentialing access to a restricted area includes receiving a reservation request at a reservation server, extracting reservation information from the reservation request using the reservation server, where the reservation information includes at least a set of authorized visitors from the reservation request, a timestamp of the reservation request, and a room identifier of the reservation request, passing the reservation information to a credentialing server, providing an access credential to each visitor in the set of authorized visitors, transmitting a notification to the credentialing server in response to the access credential of at least one authorized visitor being utilized, and compiling a list of each authorized user whose access credentials were utilized.

Another example of the above described method for credentialing access to a restricted area further includes transmitting at least one notification to a reservation manager, the at least one notification including a list of each visitor in the set of authorized visitors whose access credential was utilized.

In another example of any of the above described methods for credentialing access to a restricted area the list includes a user name and a timestamp corresponding to each utilized access credential.

In another example of any of the above described methods for credentialing access to a restricted area the timestamp is a listing of each time the corresponding access credential was utilized.

Another example of any of the above described methods for credentialing access to a restricted area further includes authenticating the reservation request by at least verifying a payment.

In another example of any of the above described methods for credentialing access to a restricted area authenticating the reservation request by at least verifying payment includes processing a payment using a payment processing module in an authentication sub module of the reservation server.

In another example of any of the above described methods for credentialing access to a restricted area authenticating the reservation request by at least verifying payment includes comparing a payment indicator to a received payments database, and authenticating the reservation request in response to the payment indicator matching an entry in the received payments database.

In one exemplary embodiment a system for reserving a room includes a reservation server configured to be connected to a first computing device via a network, a credentialing server in communication with the reservation server, at least one smart lock connected to the credentialing server via the network, and wherein the reservation server and the credentialing server are configured to perform the steps of receiving a reservation request at the reservation server, extracting reservation information from the reservation request using the reservation server, where the reservation information includes at least a set of authorized visitors from the reservation request, a timestamp of the reservation request, and a room identifier of the reservation request, passing the reservation information to the credentialing server, authenticating the reservation request by at least verifying a payment, and providing an access credential to each visitor in the set of authorized visitors

These and other features of the present invention can be best understood from the following specification and drawings, the following of which is a brief description.

### BRIEF DESCRIPTION OF THE DRAWINGS

Figure 1 illustrates a high level schematic view of an automated room reservation and credentialing service.
Figure 2A schematically illustrates a reservation server for the system of Figure 1.
Figure 2B schematically illustrates a credentialing server for the system of Figure 1.
Figure 3 schematically illustrates a method for generating access credentials using the system of Figure 1.
Figure 4 schematically illustrates a method for automatically updating reservation credentials using the system of Figure 1.
Figure 5 schematically illustrates a method for monitoring usage of access credentials within the system of Figure 1.

### DETAILED DESCRIPTION

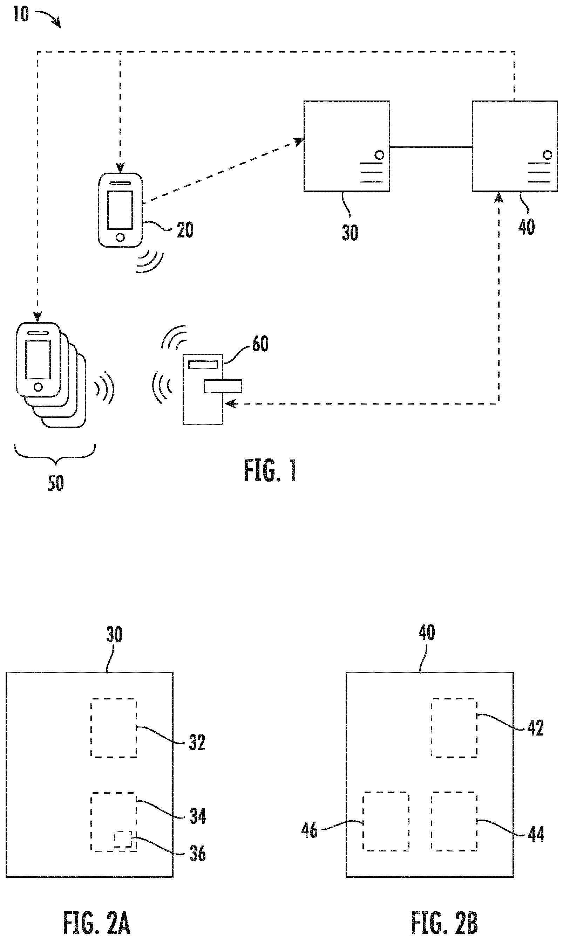

Figure 1 schematically illustrates a system 10 for automatically reserving and credentialing a secured room, such as a hotel conference room, university laboratory, and the like. The system 10 includes a first computing device 20, a reservation server 30, a credentialing server 40, a set of authorized visitor mobile devices 50, and a smart lock 60. The first computing device 20 can be a mobile phone, tablet, or any other computer and includes a calendaring program configured to record a user's schedule. In some examples, a designated reservation app or calendar plugin is further included on the first computing device 20 and facilitates the interaction between the first computing device 20 and the reservation server 30. In alternative examples, the first computing device 20 can generate a conventional meeting request utilizing a calendar program, and the reservation server 30 can parse the meeting request for pertinent information.

In some examples, the first computing device 20 can be included within the set of authorized visitor mobile devices 50, and in other examples, a designated leader (the person reserving the room) can create the reservation using the first computing device 20 and receive credentials at a second device included within the set of authorized visitor mobile devices 50.

When the leader wishes to reserve a room, the leader enters a reservation request into the first computing device 20 using either the reservation app, or a calendar scheduling request in a calendar program or e-mail client. The reservation request is transmitted from the first computing device 20 to the reservation server 30. The reservation information in the reservation request includes at least a set of authorized visitors from the reservation request, a timestamp of the reservation request, and a room identifier of the reservation request. In some examples, the transmission is in the form of a special formatted e-mail transmitted to a designated email address and is formatted to be able to be read by the reservation server 30. In alternative examples, the transmission can be via a direct data transmission between an app or plug in on the first computing device 20 and the reservation server 30.

In either example, once the reservation server 30 has received the reservation request, the reservation server 30 parses the request to determine any pertinent information including the identity of the leader, the identity of any other authorized visitors, the date of the reservation, the room number of the reservation, and the time of the reservation. In the event that the reservation is a paid reservation, such as a rented conference room, the reservation server 30 can further parse the payment information from the request or from an account associated with the leader and automatically process payment. Alternatively, the reservation server 30 can verify that payment has been received via another payment system, through the inclusion of payment indicator such as a receipt, transaction number, hotel room confirmation number, or the like within the reservation request. The payment indicator is then compared with a payment database to verify accuracy and, if accurate, allows the reservation to continue.

Once all the reservation information has been successfully parsed, and payment has been authenticated if necessary, the reservation server 30 reserves the requested room, or a similar room if the requested room is already reserved, and passes the reservation details to the credentialing server 40. In the illustrated example, the credentialing server 40 is connected to the one or more smart locks 60 securing the reserved room and is configured to generate an access credential for each authorized user. The access credential is limited to the reserved time, and allows the authorized visitor to access the reserved room within the reservation timeframe. In some examples, the credential can be user specific and any single user can include their access credential on multiple mobile devices 50. In alternative examples, the credentials can be device specific, and each user is limited to a single device 50 in the set of authorized devices 50.

The generated credential can be a single credential or multiple credentials and can be for access to the reserved room only or for the reserved room and any other doors that are required to reach the reserved room. The credential is any known credential used with mobile credentialing systems and the credential specifies access rights. The credential is verifiable with a digital signature and secured using encryption technology so that the smart lock 60 can validate the credential and determine the access rights of the user from the credential. Alternatively, the credential can be of a form of an identity, access code, or the like that is further used by the smart lock 60 to determine whether access should be granted through a communication with the credentialing server 40. Smart locks can communicate with the credentialing server 40 through wireless or wired means including short range wireless networks or long range wireless networks as is well known in the art of networking devices to services.

Once each user has been assigned credentials via the credentialing server 40, the credentialing server 40 communicates the credentials to each of the first computing device 20, and the devices 50. The first computing device 20, and the mobile devices 50 can then use the credentials to access the reserved room at the appropriate time. The mobile devices 50 can be associated with a user's account that is registered with the credential service 40. A user account can be identified by their email address, username, or via any other known identification. In this way, a room reservation that includes a number of user emails, usernames, or other identifiers results in credentials being issued to each user as identified by their identifier and to their associated mobile device 50.

In one example, the credentialing server 40 sends a notification to the house keeping staff prior to the meeting with a single opening mobile credential. The single opening mobile credential allows housekeeping, maintenance, or other staff necessary to prepare the room prior to the reservation time, or to clean the room subsequent to the reservation time to access the room. The single opening mobile credential can be limited in that it allows access only within a window of time before and after the reservation, limited in that it only allows a single access to the room, or any similar limit. By way of example, in some embodiments, the single opening mobile credential is valid from an opening time of the date for the meeting until one hour after the meeting is scheduled to end. Further, in some examples, the users receiving the single opening mobile credential can also receive a notification when the credential is received.

While described above with regards to short range wireless credentials between a mobile device and a smart lock 60, it should be understood that other credentialing systems, such as a user specific pin, an access code, and the like can be transmitted to each authorized visitor through email or through a dedicated app on their mobile device 50.

In some examples, the system 10 can be further utilized to automatically push updated credentials, or modified credentials, to each authorized visitor in the event that the lead visitor updates or alters the reservation. Further, in some other examples, the system 10 can include a monitoring function that monitors which users utilize their credentials, when they use the credentials, and provides the lead visitor with a listing of the users that utilized their credentials. By way of example, the latter option can be utilized to monitor attendance at an event or class.

With continued reference to Figure 1, and with like numerals indicating like elements, Figure 2A schematically illustrates the reservation server 30, and Figure 2B schematically illustrates the credentialing server 40. While illustrated in Figures 1, 2A and 2B as distinct physical computer systems, one of skill in the art will appreciate that the reservation server 30 and the credentialing server 40 could, alternatively, be distinct software servers contained within a single physical computer system without altering the disclosed system.

Included within each server 30, 40 are multiple software modules with each software module being configured to perform a designated function in conjunction with the other software modules on that server 30, 40.

By way of example, in the illustrated configuration, the reservation server 30 includes a parsing module 32 configured to read the data included in the reservation request, and extract the data according to known data extraction techniques. Also included in the reservation server 30 is a reservation module 34 configured to utilize the extracted data and reserve a corresponding room including communicating the user access rights to the room to the credential server 40. In the illustrated example, the reservation module 34 further includes an authentication sub-module 36.

The authentication sub-module 36 is a payment processing module, through which payment for a given reservation is processed and confirmed in some examples. In alternative examples, the authentication sub module 36 is configured to receive payment information that has been extracted from the reservation message, and verify that the payment has been received. Once the verification has been made, the reservation module 34 is allowed to proceed with the reservation.

In the illustrated example credentialing server 40, the server 40 includes a credentials module 42, an update module 44, and an attendance monitoring module 46. The credentials module 42 is configured to generate access credentials for each visitor authorized according to the reservation information received from the reservations server 30, and provide the credentials to the authorized visitor. The credentials can be provided in the form of a push notification to the authorized user's mobile device 50, a sms notification, an email or any similar means of communicating the credentials to the authorized visitor's mobile device 50 or to an application running on the mobile device 50.

An authorized visitor, or user, would have an account registered on the credential service in the credential module 42. A user registering through an app can configure a push notification service back to the app on the mobile device 50. Alternatively, the registration of the user can provide a mobile device identifier such as a MAC address, telephone number, mobile subscriber identifiers and the like. Alternatively, the registration of the user can include providing an email address, social media identity, or other unique identifier for the user. The registration can be triggered by the reservation itself when only the email address is known because it was included in the meeting request. Once registered, the app on the mobile device 50 can utilize the registration itself as a trust relationship to authenticate, request and pull credentials from the credentials module 42 on demand. Or the credential module 42 can use the registration information to push the credentials to the app on the mobile device 50.

In some examples, the lead visitor can desire to update or alter the reservations. The update can include adding new authorized visitors, removing existing authorized visitors, altering a reserved room number, altering date or time of the reservation and the like. In such an example, the lead visitor transmits the updated reservation to the reservation server 30 in the same manner as with the initial reservation. However, once the request has been parsed by the reservation server 30, the updated information is provided to the update module 44. The update module 44 alters the reservation in whatever capacity is needed, and causes the credentials module 42 to regenerate the credentials for each authorized user. The regenerated credentials are then pushed or pulled to each authorized user's mobile device 50 by the credentials module 42.

In yet further examples, the lead visitor can desire to monitor the attendance within the reserved room either in real time or after the event for which the room was reserved. In order to accomplish this, the lead visitor requests an attendance report from the credentialing server 40. In response, the monitoring module 46 polls the smart lock 60 to determine which, if any, user credentials have accessed the smart lock 60. Alternatively, on the use of a credential, the app on the mobile device 50 may report the access of the smart lock 60 to the credential monitoring module 46. The resultant details are then correlated with a list of users and stored in a memory of the credentialing server 40. When the leader requests the attendance list, the credentialing server 40 transmits the attendance list from the memory to the lead visitor. In some examples, the attendance list includes a user name and a timestamp corresponding to each utilized access credential. In yet further examples, the timestamp is a listing of each time the corresponding access credential was utilized.

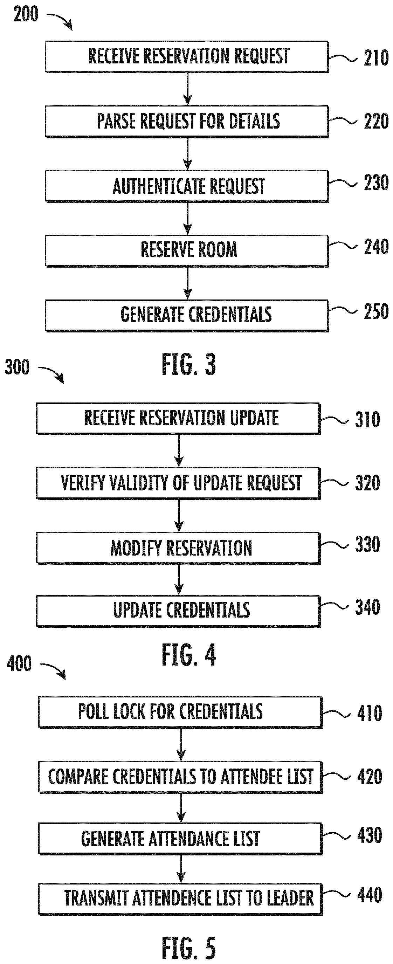

With continued reference to the system 10 described in Figures 1-2B, Figure 3 illustrates a flowchart of a method 200 for reserving a room using the system 10 of Figure 1. Initially, the reservation server 30 receives a reservation request from the lead visitor in a "Receive Reservation Request" step 210. The reservation request can be a specifically formatted email, or a direct communication from an app or plug in on the first computing device 20.

By way of example, an app may be Microsoft Outlook email client running on a computing device 20. Further to this example, a plug-in may be loaded into Outlook that directly connects to the reservation server 30 to communicate the reservation request details when a calendar entry is created that includes a reservable room for which credentials can be generated. The plug-in can communicate to the reservation server 30 using any known technique for client-server communications over network connections, for example using HTTPS and REST API calls, or other known Internet protocols. Alternative email clients may work similarly by providing plug-in capabilities or incorporating the plug-in as part of the main email client application.

In an alternate example, an email client can send an email to the reservation server 30. The email can include an email address that is for the reservation server 30. In this example the reservation server 30 can include an email server or an email client for receiving the specifically formatted email. The specifically formatted email can include email addresses for the authorized attendees in the "to" or "cc" or "bcc" fields of the email. The email can include authentication information including an account identifier for the lead visitor or requester or the like. The email can include a digital signature from the lead visitor or requester that can be verified by the reservation server 30. The digital signature can be of a form well known in the art of sending secure, verifiable emails.

Once received at the reservation server 40, the parsing module 32 parses the reservation request for reservation details in a "Parse Request for Details" step 220 including any validation of the email for authorization or authenticity. Once the details are determined, the reservation server 30 verifies that the request is accurate, and that a payment for the reservation has been processed using the authentication module 36 in an "Authenticate Request" step 230. Once authenticated, the room is reserved by the reservation server 30 in a "Reserve Room" step 240, and the reservations details are passed to the credentialing server 40. Finally, the credentialing server 40 generates the room credentials and provides the access credentials to each of the authorized visitors in a "Generate Credentials" step 250.

With further reference to the system 10 described in Figures 1-2B, Figure 4 illustrates a flow chart of a method 300 for automatically updating access credentials in response to alteration of a reservation by the lead visitor. Initially the reservation server 30 receives an update to the reservation in a "Receive Reservation Update" step 310. Once received, the reservation server parses the update to determine the reservation changes and verifies the validity of the update in a "Verify Validity of Update Request" step 320. In some examples, the validity can be verified by comparing an email address originating the update to an email originating the initial reservation, and determining that the update is valid when there is a match. Alternatively, a password, or other key, can be provided with the initial reservation, and the validity of the update is verified by provision of the password or passkey with the update request. Alternatively a digital signature included in the email can be verified.

Once the update request has been verified, the reservation server 30 modifies the reservation using the reservation module 34 in a "Modify Reservation" step 330. Once updated, the reservation server 30 passes the updated information to the credentialing server 40 where the update module 44 updates the credentials, and pushes the updated credentials to each device in the set of devices 50.

With further reference to the system 10 described in Figures 1-2B, Figure 5 illustrates a flow chart of a method 400 for monitoring attendance at an event using the credentialing system 10. Initially, when a lead attendee requests a report of the attendance, the credentialing server 40 polls the smart lock 60 in a "Poll Lock for Credentials" step 410. The smart lock 60 then provides the reservation server 30 with a list of all credentials that have been utilized to access the room within the reservation time frame. Alternatively, the credentialing server 40 can retrieve from a memory any known accesses to the room that have been prior communicated to the monitoring module 46 in step 410. Alternatively when attendee accesses the lock using mobile 50, the activity is automatically uploaded to credential server 40.

Once the list of used credentials has been received, the attendance monitoring module 46 compares the used credentials to the authorized attendee list in a "Compare Credentials to Attendee List" step 420. The comparison can be accomplished using any data comparison technique, and correlates the credentials that were used with the authorized attendee corresponding to those particular credentials. Once the comparison has been performed, the attendance monitoring module 46 generates an attendance list in a "Generate Attendance list" step 430. The attendance list is, in one example, a listing of each authorized attendee who's credentials were used to access the room, as well as an entry for the time at which they accessed the room.

Finally, the attendance list is transmitted to the lead attendee who requested the attendance list in a "Transmit Attendance List to Leader" step 440. While described here as being provided in response to an active inquiry from the lead attendee, it should be further understood that the attendance list could be automatically provided at the conclusion of the reservation, or at any other predetermined time depending on the configuration of the system 10. Further, the attendance list can be provided to another designated lead attendee, or any other designated individual in some examples.

It is further understood that any of the above described concepts can be used alone or in combination with any or all of the other above described concepts. Although an embodiment of this invention has been disclosed, a worker of ordinary skill in this art would recognize that certain modifications would come within the scope of this invention as defined by the claims. For that reason, the following claims should be studied to determine the true scope and content of this invention.

## Claims

1. A method for credentialing access to a restricted area comprising:
receiving a reservation request at a reservation server (30);
extracting reservation information from the reservation request using the reservation server (30), where the reservation information includes at least a set of authorized visitors from the reservation request, a timestamp of the reservation request, and a room identifier of the reservation request;
passing the reservation information to a credentialing server (40); authenticating the reservation request by at least verifying a payment; and providing an access credential to each visitor in the set of authorized visitors.

2. The method of claim 1, wherein authenticating the reservation request by at least verifying payment includes processing a payment using a payment processing module in an authentication sub module (36) of the reservation server (30).

3. The method of claim 1 or 2, wherein authenticating the reservation request by at least verifying payment includes comparing a payment indicator to a received payments database, and authenticating the reservation request in response to the payment indicator matching an entry in the received payments database.

4. The method of claim 1, 2 or 3, wherein the reservation request is an email, and wherein the email identifies each authorized user via the authorized user's email address.

5. The method of any of claims 1 to 4, further comprising modifying at least one reservation detail in response to an update reservation request from a leader; optionally further comprising updating a set of access credentials based on the at least one reservation detail and providing an updated access credential to each visitor in the set of authorized visitors.

6. The method of any of claims 1 to 5, wherein the access credential includes at least one of an access code, a pin, and a credentials package for a smart lock application.

7. The method of any preceding claim, further comprising:
transmitting a notification to the credentialing server (40) in response to the access credential of at least one authorized visitor being utilized; and
compiling a list of each authorized user whose access credentials were utilized.

8. The method of claim 7, further comprising transmitting at least one notification to a reservation manager, the at least one notification including a list of each visitor in the set of authorized visitors whose access credential was utilized.

9. The method of claim 7 or 8, wherein the list includes a user name and a timestamp corresponding to each utilized access credential; optionally wherein the timestamp is a listing of each time the corresponding access credential was utilized.

10. The method of any preceding claim, wherein the reservation request is a communication from an email client plugin.

11. A method for credentialing access to a restricted area comprising:
receiving a reservation request at a reservation server (30);
extracting reservation information from the reservation request using the reservation server (30), where the reservation information includes at least a set of authorized visitors from the reservation request, a timestamp of the reservation request, and a room identifier of the reservation request;
passing the reservation information to a credentialing server (40);
providing an access credential to each visitor in the set of authorized visitors; transmitting a notification to the credentialing server (40) in response to the access credential of at least one authorized visitor being utilized; and
compiling a list of each authorized user whose access credentials were utilized.

12. The method of claim 11, further comprising transmitting at least one notification to a reservation manager, the at least one notification including a list of each visitor in the set of authorized visitors whose access credential was utilized.

13. The method of claim 11 or 12, wherein the list includes a user name and a timestamp corresponding to each utilized access credential; optionally wherein the timestamp is a listing of each time the corresponding access credential was utilized.

14. The method of claim 11, 12 or 13, further comprising authenticating the reservation request by at least verifying a payment; optionally wherein authenticating the reservation request by at least verifying payment includes processing a payment using a payment processing module in an authentication sub module (36) of the reservation server (30); and/or wherein authenticating the reservation request by at least verifying payment includes comparing a payment indicator to a received payments database, and authenticating the reservation request in response to the payment indicator matching an entry in the received payments database.

15. A system (10) for reserving a room comprising:
a reservation server (30) configured to be connected to a first computing device (20) via a network;
a credentialing server (40) in communication with the reservation server (30);
at least one smart lock (60) connected to the credentialing server (40) via the network; and
wherein the reservation server (30) and the credentialing server (40) are configured to perform the steps of:
receiving a reservation request at the reservation server (30);
extracting reservation information from the reservation request using the reservation server (30), where the reservation information includes at least a set of authorized visitors from the reservation request, a timestamp of the reservation request, and a room identifier of the reservation request;
passing the reservation information to the credentialing server (40);
authenticating the reservation request by at least verifying a payment; and
providing an access credential to each visitor in the set of authorized visitors.
